# DEMANDE DE BREVET EUROPEEN

(11) **EP 4 765 768 A1**
(43) Date de publication de la demande: **24.06.2026**
(21) Numéro de dépôt: 25224284.7
(22) Date de dépôt: 17.12.2025
(51) Int. Cl.: H04L 61/45, H04W 4/90, H04W 8/18

(54) **PROCÉDÉ DE RECHERCHE D'UN UTILISATEUR DANS UN RÉSEAU DE COMMUNICATION SELON LE STANDARD 3GPP MCS**

(30) Priorité: 23.12.2024 FR 2414393
(71) Demandeur: Airbus DS SLC, 78990 Elancourt (FR)
(72) Inventeur: PATEROUR, Olivier, 78990 ELANCOURT (FR); PIROARD, François, 78990 Elancourt (FR)
(74) Mandataire: Cabinet Camus Lebkiri

(57) **Abrégé**

Un aspect de l'invention concerne un procédé (100) de recherche d'au moins un utilisateur dans un réseau de communication selon le standard 3GPP MCS, le procédé (100) comprenant :
- Génération (120), par l'entité MCX cliente (C), d'une requête de recherche comprenant le au moins un critère de recherche standardisé,
- Envoi (130) au serveur MCX (S), par l'entité MCX cliente (C), de la requête de recherche,
- Recherche (140), par le serveur MCX (S), du au moins un utilisateur dans le réseau de communication, la recherche étant effectuée à partir de la requête de recherche dans une liste de profils utilisateurs stockée au niveau du serveur MCX (S), et
- Envoi (190) à l'entité MCX cliente (C), par le serveur MCX (S), d'un résultat de la recherche comprenant une liste du au moins un utilisateur identifié.

## Description

### DOMAINE TECHNIQUE DE L'INVENTION

Le domaine technique de l'invention est celui des réseaux de communication et plus particulièrement celui des réseaux de communication selon le standard 3GPP MCS.

La présente invention concerne un procédé de recherche d'au moins un utilisateur dans un réseau de communication selon le standard 3GPP MCS pour « 3rd Generation Partnership Project Mission Critical Services » en anglais.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en œuvre de réseaux professionnels sécurisés. Ces réseaux à bande étroite sont des réseaux locaux, nationaux ou internationaux. Ces réseaux peuvent être implémentés au sein d'une organisation telle qu'une entreprise mais aussi pour une zone géographique telle qu'une région ou un pays. Ces réseaux sont par exemple utilisés pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications », notamment dans leurs troisième, quatrième et cinquième générations respectivement appelées « 3G », « 4G » et « 5G », et générations suivantes, et plus particulièrement dans les déploiements faisant appel à des services de communications critiques définis par le 3GPP appelés « MCS » selon la dénomination anglo-saxonne « Mission Critical Services » permet ces échanges sécurisés en large bande. Un réseau 3G, 4G ou 5G met en œuvre un équipement terminal 3G/4G/5G, un réseau d'accès radio RAN (de l'anglais « Radio Access Network ») 3G/4G/5G et un cœur de réseau (3G/4G/5G). Les déploiements des services MCS en large bande ne se limitent bien entendu pas aux réseaux mobiles 3G/4G/5G mais incluent aussi des déploiements dans des réseaux IP (de l'anglais « Internet Protocol ») fixes et mobiles, par exemple des WLAN, de l'anglais « Wireless Local Area Network ».

On entend par « réseau de communication selon le standard 3GPP MCS », un réseau de communication compatible avec le standard 3GPP MCS et plus particulièrement avec la version 13 du 3GPP et avec les versions suivantes intégrant toutes les caractéristiques de l'invention.

Dans le standard 3GPP MCS, les services de communication suivants sont définis :
- MCPTT, de l'anglais « Mission Critical Push To Talk » pour « Appuyer Pour Parler en Mission Critique » en français, qui permet de réaliser des communications voix,
- MCVideo, qui permet de réaliser des communications vidéo,
- MCData, qui comprend trois sous-services :
   - SDS de l'anglais « Short Data Service » pour « Service de données courtes » en français et
   - FD de l'anglais « File Distribution » pour « Distribution de fichier » en français,
   - IPCON de l'anglais « IP Connectivity » pour « Connectivité IP » en français.

Par «entité MCX », il est fait référence à une entité cliente du réseau mettant en œuvre tout service de communication du 3GPP MCS, c'est-à-dire MCPTT, MCData ou MCVideo. De plus, par « serveur MCX », il est fait référence à un serveur du réseau configuré pour mettre en œuvre tout service de communication du 3GPP MCS, c'est-à-dire MCPTT, MCData ou MCVideo. Ainsi, l'entité MCX est connectée à un serveur MCX. L'entité MCX pouvant être un client MCX sur un mobile 4G/5G ou un client MCX déployé sur un équipement fixe ou portable
Dans le standard 3GPP MCS, un utilisateur, i.e. utilisateur de services MCX, peut uniquement contacter les autres utilisateurs dont il a l'identifiant MCX. Cet identifiant MCX est un attribut stocké sous la forme d'un texte libre. L'identifiant MCX des autres utilisateurs est stocké dans une liste de contacts préétablie au sein du profil de l'utilisateur. Cette fonctionnalité est très limitée et ne permet pas par exemple une gestion optimale d'événements extraordinaires tels que des incendies, inondations, attentats, etc... En effet, lors de tels événements, un utilisateur peut être amené à devoir collaborer avec des personnes en renfort avec lesquelles il ne travaille pas habituellement et qu'il ne connaît peut-être pas. Par exemple, un utilisateur devant coordonner une mission de secours peut vouloir rechercher un médecin disponible. De plus, lors de tels événements, l'utilisateur peut être amené à devoir collaborer avec des personnes n'appartenant pas à la même organisation. Par exemple, un militaire en intervention peut être amené à devoir contacter une personne gérant le réseau électrique ou le réseau de gaz. En outre, lors de tels événements, l'utilisateur peut être amené à vouloir collaborer uniquement avec des personnes pouvant intervenir rapidement sur le lieu d'un accident par exemple. Enfin, l'utilisateur doit pouvoir rechercher d'autres utilisateurs selon des règles assurant la sécurité au sein du réseau professionnel sécurisé. A l'heure actuelle, le standard 3GPP MCS ne répond à aucun de ces besoins.

Il existe donc un besoin de fournir un procédé de recherche d'au moins un utilisateur, conforme au standard 3GPP MCS, permettant de résoudre, au moins en partie les problèmes susmentionnés.

### RESUME DE L'INVENTION

L'invention offre une solution aux problèmes évoqués précédemment, en permettant à un utilisateur d'un réseau de communication selon le standard 3GPP MCS de rechercher d'autres utilisateurs du même réseau de communication selon le standard 3GPP MCS à l'aide de critères standardisés. Le procédé de recherche d'utilisateurs selon l'invention permet en effet de filtrer, via des attributs standardisés ajoutés dans les profils de tous les utilisateurs d'un système, les utilisateurs qui respectent des critères de recherche standardisés.

Un aspect de l'invention concerne un procédé de recherche d'au moins un utilisateur dans un réseau de communication selon le standard 3GPP MCS, pour « 3rd Generation Partnership Project Mission Critical Services » en anglais, mis en œuvre par un système comprenant une entité MCX cliente et un serveur MCX connectés au sein du réseau de communication, le procédé comprenant :
- Réception, par l'entité MCX cliente, d'une demande de recherche du au moins un utilisateur dans le réseau de communication, chaque utilisateur ayant un profil utilisateur comprenant au moins un attribut standardisé, la demande de recherche comprenant au moins un critère de recherche standardisé permettant d'identifier le au moins un utilisateur à partir du au moins un attribut standardisé,
- Génération, par l'entité MCX cliente, d'une requête de recherche comprenant le au moins un critère de recherche standardisé,
- Envoi au serveur MCX, par l'entité MCX cliente, de la requête de recherche,
- Recherche, par le serveur MCX, du au moins un utilisateur dans le réseau de communication, la recherche étant effectuée à partir de la requête de recherche dans une liste de profils utilisateurs stockée au niveau du serveur MCX, et
- Envoi à l'entité MCX cliente, par le serveur MCX, d'un résultat de la recherche comprenant une liste du au moins un utilisateur identifié.

Grâce à l'invention, un utilisateur peut rechercher un ou plusieurs utilisateurs sans connaitre les autres utilisateurs, et en particulier leurs identifiants MCX, à l'avance. Ainsi, si l'utilisateur doit collaborer avec d'autres personnes, par exemple pour gérer une situation exceptionnelle, il peut rechercher des utilisateurs selon des critères de recherche standardisés. Ainsi, il peut par exemple rechercher des utilisateurs ayant une fonction spécifique ou un grade particulier ou encore étant disponibles immédiatement. Enfin, le procédé selon l'invention assure l'interopérabilité entre les éléments du système implémentant le procédé selon l'invention, par exemple entre l'entité MCX cliente et le serveur MCX ou encore entre deux serveurs MCX.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- la requête de recherche est une requête HTTP comprenant une structure de données de format JSON, la structure de données comprenant le au moins un critère de recherche standardisé ;
- chaque profil utilisateur comprend au moins un attribut standardisé parmi :
   - Un identifiant d'une organisation de mission critique, pour « Mission Critical organization » en anglais,
   - Au moins un alias d'utilisateur,
   - Un type de participant utilisateur, pour « user participant type » en anglais,
   - Un nom d'utilisateur,
   - Un prénom de l'utilisateur,
   - Une fonction de l'utilisateur,
   - Un grade de l'utilisateur,
   - Un rôle de l'utilisateur,
   - Un statut de l'utilisateur, et
   - Une position géographique de l'utilisateur ;
- Le procédé comprend en outre :
   - Affichage du résultat de la recherche, et/ou
   - Etablissement d'une communication avec au moins un utilisateur compris dans la liste d'au moins un utilisateur du résultat de la recherche ;
- chaque profil utilisateur comprend en outre un critère de visibilité définissant une visibilité ou non du profil de l'utilisateur dans le résultat de la recherche ;
- le serveur MCX est en outre connecté au sein du réseau de communication à au moins un serveur MCX additionnel, le procédé comprenant en outre, après l'envoi de la requête de recherche et avant l'envoi du résultat de la recherche :
   - Envoi, par le serveur MCX, de la requête de recherche au au moins un serveur MCX additionnel,
   - Recherche, par le au moins un serveur MCX additionnel, du au moins un utilisateur, la recherche étant effectuée à partir de la requête de recherche dans une liste de profils utilisateurs stockée au niveau du au moins un serveur MCX additionnel,
   - Envoi au serveur MCX, par le au moins un serveur MCX additionnel, d'au moins un résultat additionnel de la recherche, et
- dans lequel le résultat de la recherche comprend le au moins un résultat additionnel de la recherche ;
- chaque profil utilisateur comprend un critère d'autorisation de recherche définissant un espace de recherche dans lequel l'utilisateur a le droit d'effectuer une recherche, l'espace de recherche pouvant être :
   - Un premier ensemble d'utilisateurs dont le profil utilisateur est stocké sur le serveur MCX, ou
   - Un groupe d'utilisateurs parmi le premier ensemble des utilisateurs, ou
   - Un deuxième ensemble d'utilisateurs dont le profil utilisateur est stocké sur le serveur MCX ou sur le au moins un serveur MCX additionnel, ou
   - Un groupe d'utilisateurs parmi le deuxième ensemble des utilisateurs ;
- une variable d'autorisation d'initiation de recherche étendue est stockée par le serveur MCX, la variable d'autorisation d'initiation de recherche étendue comprenant une liste du au moins un serveur MCX additionnel pour lequel le serveur MCX est autorisé d'envoyer la requête de recherche, le procédé comprenant en outre :
   - Détermination à partir de la variable d'autorisation d'initiation de recherche étendue, avant l'envoi par le serveur MCX de la requête de recherche au au moins un serveur MCX additionnel, du au moins un serveur MCX additionnel auquel la requête de recherche doit être envoyée ;
- Une variable d'autorisation de participation de recherche étendue est stockée par le au moins un serveur MCX additionnel, la variable d'autorisation de participation de recherche étendue autorise ou non d'effectuer une recherche d'utilisateurs par le au moins un serveur MCX additionnel en réponse à la requête de recherche envoyée par le serveur MCX, et
- La recherche, par le au moins un serveur MCX additionnel, d'au moins un utilisateur est mise en œuvre uniquement lorsque la variable d'autorisation de participation de recherche étendue stockée par le au moins un serveur MCX additionnel autorise le au moins un serveur MCX additionnel à effectuer la recherche d'utilisateurs en réponse à la requête de recherche envoyée par le serveur MCX.

Un autre aspect de l'invention concerne un système comprenant un réseau de communication selon le standard 3GPP MCS « 3rd Generation Partnership Project Mission Critical Services », le réseau de communication comprenant une entité MCX cliente et un serveur MCX, l'entité MCX cliente et le serveur MCX étant connectés au sein du réseau de communication, l'entité MCX cliente étant configurée pour :
- Réceptionner une demande de recherche d'au moins un utilisateur, chaque utilisateur ayant un profil utilisateur comprenant au moins un attribut standardisé, la demande de recherche comprenant au moins un critère de recherche standardisé permettant d'identifier au moins un utilisateur à partir du au moins un attribut standardisé,
- Générer une requête de recherche comprenant le au moins un critère de recherche standardisé, et
- Envoyer au serveur MCX, la requête de recherche, et
le serveur MCX étant configuré pour :
- Rechercher le au moins un utilisateur, la recherche étant effectuée à partir de la requête de recherche, envoyée par l'entité MCX cliente, dans une liste de profils utilisateurs stockée au niveau du serveur MCX, et
- Envoyer à l'entité MCX cliente un résultat de la recherche comprenant une liste d'au moins un utilisateur identifié.

Outre les caractéristiques qui viennent d'être évoquées dans le paragraphe précédent, le système selon un aspect de l'invention peut aussi présenter les caractéristiques suivantes :
- Le réseau de communication comprend en outre au moins un serveur MCX additionnel configuré pour :
   - Rechercher le au moins un utilisateur, la recherche étant effectuée à partir de la requête de recherche dans une liste de profils utilisateurs stockée au niveau du au moins un serveur MCX additionnel,
   - Envoyer au serveur MCX au moins un résultat additionnel de la recherche, et
- dans lequel le serveur MCX est en outre configuré pour :
   - Déterminer à partir de la variable d'autorisation d'initiation de recherche étendue, avant l'envoi de la requête de recherche au au moins un serveur MCX additionnel, le au moins un serveur MCX additionnel auquel la requête de recherche doit être envoyée, et
   - Envoyer la requête de recherche au au moins un serveur MCX additionnel.

Un aspect additionnel de l'invention concerne un programme d'ordinateur comprenant des instructions qui conduisent le système selon l'invention à exécuter le procédé selon l'invention.

Un dernier aspect de l'invention concerne un support lisible par ordinateur, sur lequel est enregistré le programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un exemple de système configuré pour la mise en œuvre d'un exemple procédé selon l'invention.
- La figure 2 montre une représentation schématique d'un exemple de système configuré pour la mise en œuvre d'un exemple de variante du procédé selon l'invention.
- La figure 3 est un schéma synoptique illustrant l'enchaînement des étapes d'un exemple du procédé selon l'invention.

### DESCRIPTION DETAILLEE

Sauf précision contraire, un même élément apparaissant sur des figures différentes présente une référence unique.

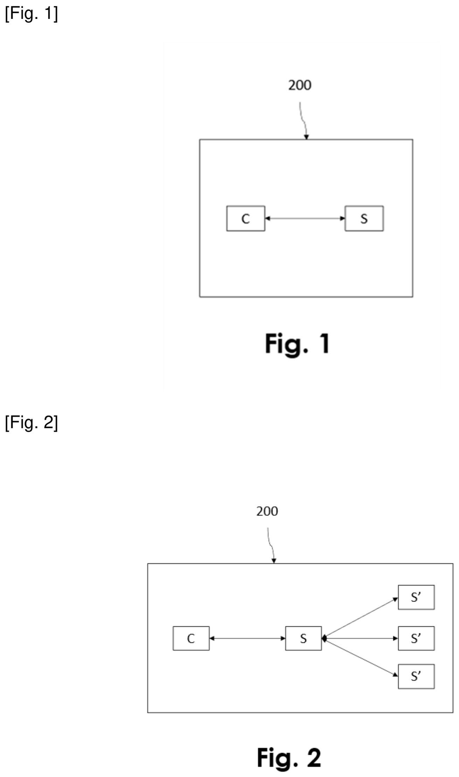

La figure 1 représente un exemple de système 200 adapté pour mettre en œuvre le procédé 100.

Le procédé de recherche d'au moins un utilisateur dans un réseau de communication selon le standard 3GPP MCS selon l'invention est mis en œuvre par le système 200. Le procédé de recherche permet donc à un utilisateur du réseau de communication selon le standard 3GPP MCS de rechercher d'autres utilisateurs connectés au même réseau de communication selon le standard 3GPP MCS. Par « mis en œuvre par un système », il est entendu que les étapes, ou pratiquement toutes les étapes du procédé, sont exécutées par des entités du système 200 tel qu'un serveur MCX S ou une entité MCX C. Ainsi, des étapes sont réalisées par les entités du système 200, éventuellement de manière entièrement automatique, ou semi-automatique. Dans des exemples, le déclenchement d'au moins certaines des étapes de ce procédé peut être effectué par interaction utilisateur-ordinateur. Le niveau d'interaction utilisateur-ordinateur requis peut dépendre du niveau d'automatisme prévu et mis en balance avec la nécessité de mettre en œuvre les souhaits de l'utilisateur. Dans des exemples, ce niveau peut être défini par l'utilisateur et/ou prédéfini.

Un exemple typique d'implémentation du procédé par le système 200 consiste à exécuter le procédé avec des entités adaptées à cet effet tels qu'une entité MCX cliente C et un serveur MCX S. Les entités du système 200 sont connectées au sein du réseau de communication dans lequel l'utilisateur recherche d'autres utilisateurs. Les entités du système 200 peuvent donc communiquer par exemple via des requêtes telles que des requêtes HTTP pour « Hypertext Transfer Protocol » en anglais.

La figure 2 représente un exemple de système 200 adapté pour mettre en œuvre une variante du procédé 100. Dans cet exemple, le système 200 comprend en outre au moins un serveur MCX additionnel S'. Sur la figure 2, trois serveurs MCX additionnels S' sont représentés mais leur nombre peut varier. Chaque serveur MCX additionnel S' est connecté au serveur MCX S au sein du réseau de communication. Le serveur MCX S et le au moins un serveur MCX additionnel S' peuvent donc communiquer par exemple via des requêtes telles que des requêtes **HTTP.**

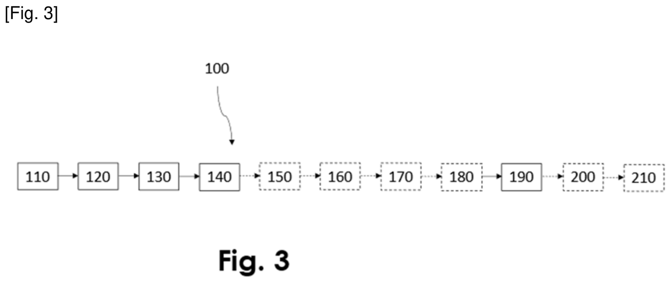

La figure 3 est un schéma synoptique illustrant les étapes d'un exemple du procédé 100 selon l'invention. Les étapes obligatoires de l'exemple du procédé 100 sont indiquées par un rectangle en traits pleins et les étapes facultatives sont indiquées par un rectangle en traits pointillés.

Une étape 110 du procédé 100 comprend la réception par l'entité MCX cliente C d'une demande de recherche d'au moins un utilisateur du réseau de communication 3GPP MCS. La demande de recherche peut par exemple être initiée par un utilisateur de l'entité MCX cliente C via une interface utilisateur graphique affichée sur un écran de l'entité MCX cliente C. Chaque utilisateur du réseau de communication 3GPP MCS possède un profil utilisateur. Chaque profil utilisateur comprend au moins un attribut standardisé. La demande de recherche comprend au moins un critère de recherche standardisé permettant d'identifier au moins un utilisateur à partir du au moins un attribut standardisé. Dit autrement, le au moins un critère de recherche standardisé permet de filtrer les utilisateurs selon au moins attribut standardisé présent dans leurs profils. Il est possible de noter qu'une demande de recherche peut aboutir à identifier aucun utilisateur, par exemple lorsqu'aucun utilisateur ne répond aux critères de recherche standardisés de la demande de recherche. Par « standardisé », il est entendu que l'attribut ou le critère de recherche respecte un standard prédéterminé. Le standard est connu et respecté par l'ensemble des utilisateurs du réseau de communication 3GPP MCS.

Dans un exemple, compatible avec les exemples précédents, chaque profil utilisateur comprend au moins un attribut standardisé parmi une liste d'attributs standardisés. La liste d'attributs standardisés comprend notamment :
- un identifiant d'une organisation de mission critique, pour « Mission Critical organization » en anglais, c'est-à-dire l'identifiant de l'organisation à laquelle l'utilisateur appartient,
- au moins un alias d'utilisateur,
- un type de participant utilisateur, pour « user participant type » en anglais, le type de participant utilisateur définit notamment les droits de l'utilisateur au sein du réseau de communication
- un nom de l'utilisateur, par exemple tel qu'inscrit sur les documents officiels d'identité de l'utilisateur,
- un ou des prénoms de l'utilisateur, par exemple tel qu'inscrit sur les documents officiels d'identité de l'utilisateur,
- une fonction de l'utilisateur, par exemple la fonction au sein de l'organisation ou de l'entreprise telle que, par exemple l'intitulé du métier de l'utilisateur,
- un grade de l'utilisateur, par exemple le grade au sein d'une armée, tel que le grade de général, de lieutenant ou d'officier,
- un rôle de l'utilisateur, par exemple le rôle missionnel d'une personne, c'est-à-dire le rôle pour une mission de la personne, au sein de l'organisation ou de l'entreprise,
- un statut de l'utilisateur, par exemple un statut de présence de l'utilisateur qui peut être « disponible » ou « indisponible », ou encore un statut en situation d'urgence, par exemple parce que l'utilisateur a activé ce statut en situation d'urgence. Dans un exemple, lorsqu'un utilisateur active le statut en situation d'urgence, une notification est envoyée à une salle de commandement qui peut ensuite décider de la meilleure réponse à donner, comme par exemple distribuer l'information et les instructions à d'autres utilisateurs pouvant apporter une aide adéquate à l'utilisateur en situation d'urgence.
- une position géographique de l'utilisateur, permettant par exemple de déterminer une distance avec un lieu d'intervention voire même un temps d'atteinte au lieu d'intervention.

Dans un exemple, compatible avec les exemples précédents, la demande de recherche peut comprendre des critères de recherche standardisés correspondants au au moins un attribut standardisé. Par exemple, le au moins un critère de recherche standardisé peut être identique au au moins un attribut standardisé. Par exemple, les critères de recherche peuvent être :
- l'identifiant d'une organisation de mission critique,
- le au moins un alias d'utilisateur,
- le type de participant utilisateur,
- le nom de l'utilisateur,
- les ou les prénoms de l'utilisateur,
- la fonction de l'utilisateur,
- le grade de l'utilisateur,
- un rôle de l'utilisateur,
- le statut de présence de l'utilisateur, et/ou
- la position géographique de l'utilisateur.

De plus, des critères de recherche additionnels peuvent être ajoutés tel que par exemple la distance maximale par rapport à une position géographique, par exemple d'un lieu d'intervention, ce qui permettra de filtrer automatiquement les utilisateurs en fonction de leur position géographique.

Une étape 120 du procédé 100 comprend une génération, d'une requête de recherche. La requête de recherche est générée à partir de la demande de recherche reçue à l'étape 110. La requête de recherche comprend le au moins un critère de recherche standardisé de la demande de recherche. La génération de la requête de recherche est mise en œuvre par l'entité MCX cliente C.

Dans un exemple, compatible avec les exemples précédents, la requête de recherche est une requête HTTP. La requête HTTP comprend une structure de données de format JSON, pour « JavaScript Object Notation » en anglais, et peut comprendre le au moins un critère de recherche standardisé. Le format JSON est un format utilisé pour stocker et transmettre des données de manière structurée. Un des éléments de base d'une structure de données JSON est notamment les paires Clé-valeur. La clé est une chaîne entourée de guillemets doubles, suivie d'un deux-points, et la valeur peut être de différents types tels que des chaînes, des nombres, des objets, des tableaux, des booléens ou null. Par exemple, pour le critère de recherche du nom de l'utilisateur, la clé peut être « nom : » et la valeur peut être une chaîne de caractère telle que « Dupont ».

Une étape 130 du procédé 100 comprend un envoi au serveur MCX S, par l'entité MCX cliente C, de la requête de recherche. L'envoi est donc effectué au sein du réseau de communication. Ainsi, la requête de recherche est reçue par le serveur MCX S afin de pouvoir mettre en œuvre l'étape 140.

Une étape 140 du procédé 100 comprend une recherche, par le serveur MCX S d'au moins un utilisateur au sein du réseau de communication. La recherche est effectuée à partir de la requête de recherche envoyée à l'étape 130. La recherche est effectuée dans une liste de profils utilisateurs stockée au niveau du serveur MCX S. La liste de profils utilisateurs peut comprendre l'ensemble des utilisateurs connectés ou pouvant se connecter au serveur MCX S.

Dans un exemple, compatible avec les exemples précédents, chaque profil utilisateur de l'ensemble des utilisateurs au sein du réseau de communication comprend un critère de visibilité. Le critère de visibilité définit la visibilité ou non du profil de l'utilisateur dans le résultat de la recherche. Par exemple, la liste de profils utilisateurs stockée au niveau du serveur MCX S peut ne comprendre que les profils utilisateurs visibles. Alternativement, la liste de profils utilisateurs stockée au niveau du serveur MCX S peut comprendre les profils utilisateurs visibles et invisibles, mais seuls les profils utilisateurs visibles apparaissent dans le résultat de recherche.

Les étapes 150 à 180 sont de étapes optionnelles qui peuvent être mises en œuvre lorsqu'au moins un serveur MCX additionnel S' est compris dans le système 200.

L'étape 150 optionnelle du procédé 100 comprend une détermination du au moins un serveur MCX additionnel S' auquel la requête de recherche doit être envoyée ultérieurement par le serveur MCX S. Ainsi, dans cet exemple, une variable d'autorisation d'initiation de recherche étendue peut être stockée par le serveur MCX S. La variable d'autorisation d'initiation de recherche étendue peut comprendre une liste du au moins un serveur MCX additionnel S' pour lequel le serveur MCX S est autorisé d'envoyer la requête de recherche. Un test peut donc être effectué avant l'étape 160 pour vérifier que le serveur MCX S a l'autorisation d'initier une recherche étendue.

L'étape 160 optionnelle du procédé 100 comprend un envoi, par le serveur MCX S, de la requête de recherche au au moins un serveur MCX additionnel S'. Ainsi, la requête de recherche est reçue par le au moins un serveur MCX additionnel S' afin de pouvoir mettre en œuvre l'étape 170.

L'étape 170 optionnelle du procédé 100 comprend une recherche du au moins un utilisateur au sein du réseau de communication S. La recherche est mise en œuvre par chaque serveur MCX additionnel S' ayant reçu la requête de recherche. La recherche peut être effectuée à partir de la requête de recherche dans une liste de profils utilisateurs stockée au niveau du au moins un serveur MCX additionnel S' effectuant la recherche. La liste de profils utilisateurs peut comprendre l'ensemble des utilisateurs connectés ou pouvant se connecter au serveur MCX additionnel S' effectuant la recherche.

L'étape 180 optionnelle du procédé 100 comprend l'envoi, par le au moins un serveur MCX additionnel S' ayant effectué la recherche 170, d'au moins un résultat additionnel de la recherche. Dit autrement, chaque serveur MCX additionnel S' ayant effectué la recherche 170 envoie le résultat additionnel de sa recherche 170.

Une étape 190 du procédé 100 comprend un envoi par le serveur MCX S, d'un résultat de la recherche. Le résultat de recherche est envoyé à l'entité MCX cliente C. Le résultat de recherche comprend la liste d'au moins un utilisateur identifié. Le au moins un utilisateur identifié est le au moins un utilisateur dont le dont le au moins un attribut standardisé respecte le au moins un critère de recherche de la requête de recherche. Lorsque les étapes 160 à 180 sont mises en œuvre, le au moins un résultat additionnel de la recherche peut être ajouté dans le résultat de recherche. Le résultat de recherche peut donc être envoyé lorsque tous les résultats additionnels de recherche sont reçus par le serveur MCX S. De manière alternative, le serveur MCX S peut aussi envoyer le résultat de recherche et chaque résultat additionnel de recherche de manière séparée afin de les envoyer dès qu'ils sont prêts à être envoyés.

Dans un exemple, compatible avec les exemples précédents, chaque profil utilisateur comprend un critère d'autorisation de recherche définissant un espace de recherche dans lequel l'utilisateur a le droit d'effectuer une recherche. Ce critère d'autorisation de recherche permet donc d'améliorer la sécurité au sein du réseau de communication selon le standard 3GPP MCS. L'espace de recherche peut être :
- Un premier ensemble d'utilisateurs dont le profil utilisateur est stocké sur le serveur MCX S, c'est-à-dire l'ensemble des utilisateurs dont le profil utilisateur est stocké sur le serveur MCX S, ou
- un groupe d'utilisateurs parmi le premier ensemble des utilisateurs, c'est-à-dire une partie des utilisateurs dont le profil utilisateur est stocké sur le serveur MCX, ou
- un deuxième ensemble d'utilisateurs dont le profil utilisateur est stocké sur le serveur MCX S ou sur le au moins un serveur MCX additionnel S', c'est-à-dire l'ensemble des utilisateurs dont le profil utilisateur est stocké sur le serveur MCX S ou sur le au moins un serveur MCX additionnel S',
- un groupe d'utilisateurs parmi le deuxième ensemble des utilisateurs, c'est-à-dire une partie des utilisateurs dont le profil utilisateur est stocké sur le serveur MCX ou sur le au moins un serveur MCX additionnel S'.

Dans un exemple, compatible avec les exemples précédents, le au moins un serveur MCX additionnel S' stocke une variable d'autorisation de participation de recherche étendue. La variable d'autorisation de participation de recherche étendue autorise ou non d'effectuer une recherche d'utilisateurs par le au moins un serveur MCX additionnel S' en réponse à la requête de recherche envoyée par le serveur MCX S. Ainsi, la recherche 170 par le au moins un serveur MCX additionnel S est conditionné par un test effectué à l'aide de la variable d'autorisation de participation de recherche étendue.

Une étape 200 optionnelle du procédé 100 comprend un affichage du résultat de la recherche. L'affichage est par exemple effectué sur un écran de l'entité MCX cliente C afin que l'utilisateur puisse consulter le résultat de recherche.

Une étape 210 optionnelle du procédé 100 comprend un établissement d'une communication avec un utilisateur compris dans la liste d'au moins un utilisateur du résultat de la recherche. La communication établie peut être une communication individuelle, ou une communication de groupe, mettant en œuvre les différents services MCX, i.e. MCPTT, MCData, MCVideo, tels que définis par le standard 3GPP Par exemple, lorsque le résultat de la recherche est affiché, l'utilisateur peut directement sélectionner au moins un utilisateur à contacter sur la liste d'utilisateurs identifiés affichée. De plus, lorsque l'utilisateur établit une communication de groupe, il peut sélectionner plusieurs utilisateurs au début de l'établissement de la communication de groupe et/ou ajouter les utilisateurs à une communication de groupe déjà existante.

## Revendications

1. Procédé (100) de recherche d'au moins un utilisateur dans un réseau de communication selon le standard 3GPP MCS, pour « 3rd Generation Partnership Project Mission Critical Services » en anglais, mis en œuvre par un système (200) comprenant une entité MCX cliente (C) et un serveur MCX (S) connectés au sein du réseau de communication, le serveur MCX (S) étant en outre connecté au sein du réseau de communication à au moins un serveur MCX additionnel (S'), le procédé (100) comprenant :
- Réception (110), par l'entité MCX cliente (C), d'une demande de recherche du au moins un utilisateur dans le réseau de communication, chaque utilisateur ayant un profil utilisateur comprenant au moins un attribut standardisé, la demande de recherche comprenant au moins un critère de recherche standardisé permettant d'identifier le au moins un utilisateur à partir du au moins un attribut standardisé,
- Génération (120), par l'entité MCX cliente (C), d'une requête de recherche comprenant le au moins un critère de recherche standardisé,
- Envoi (130) au serveur MCX (S), par l'entité MCX cliente (C), de la requête de recherche,
- Recherche (140), par le serveur MCX (S), du au moins un utilisateur dans le réseau de communication, la recherche étant effectuée à partir de la requête de recherche dans une liste de profils utilisateurs stockée au niveau du serveur MCX (S),
- Envoi (160), par le serveur MCX (S), de la requête de recherche au au moins un serveur MCX additionnel (S'),
- Recherche (170), par le au moins un serveur MCX additionnel (S'), du au moins un utilisateur, la recherche étant effectuée à partir de la requête de recherche dans une liste de profils utilisateurs stockée au niveau du au moins un serveur MCX additionnel (S'),
- Envoi (180) au serveur MCX (S), par le au moins un serveur MCX additionnel (S'), d'au moins un résultat additionnel de la recherche, et

2. Envoi (190) à l'entité MCX cliente (C), par le serveur MCX (S), d'un résultat de la recherche comprenant une liste du au moins un utilisateur identifié et le au moins un résultat additionnel de la recherche. Procédé (100) selon la revendication 1 dans lequel la requête de recherche est une requête **HTTP** comprenant une structure de données de format JSON, la structure de données comprenant le au moins un critère de recherche standardisé.

3. Procédé (100) selon la revendication 1 ou 2 dans lequel chaque profil utilisateur comprend au moins un attribut standardisé parmi :
- Un identifiant d'une organisation de mission critique, pour « Mission Critical organization » en anglais,
- Au moins un alias d'utilisateur,
- Un type de participant utilisateur, pour « user participant type » en anglais,
- Un nom d'utilisateur,
- Un prénom de l'utilisateur,
- Une fonction de l'utilisateur,
- Un grade de l'utilisateur,
- Un rôle de l'utilisateur,
- Un statut de l'utilisateur, et
- Une position géographique de l'utilisateur.

4. Procédé (100) selon l'une quelconque des revendications précédentes comprenant en outre :
- Affichage (200) du résultat de la recherche, et/ou
- Etablissement (210) d'une communication avec au moins un utilisateur compris dans la liste d'au moins un utilisateur du résultat de la recherche.

5. Procédé (100) selon l'une quelconque des revendications précédentes dans lequel chaque profil utilisateur comprend en outre un critère de visibilité définissant une visibilité ou non du profil de l'utilisateur dans le résultat de la recherche.

6. Procédé (100) selon l'une quelconque des revendications précédentes dans lequel chaque profil utilisateur comprend un critère d'autorisation de recherche définissant un espace de recherche dans lequel l'utilisateur a le droit d'effectuer une recherche, l'espace de recherche pouvant être :
- Un premier ensemble d'utilisateurs dont le profil utilisateur est stocké sur le serveur MCX (S), ou
- Un groupe d'utilisateurs parmi le premier ensemble des utilisateurs, ou
- Un deuxième ensemble d'utilisateurs dont le profil utilisateur est stocké sur le serveur MCX (S) ou sur le au moins un serveur MCX additionnel (S'), ou
- Un groupe d'utilisateurs parmi le deuxième ensemble des utilisateurs.

7. Procédé (100) selon l'une quelconque des revendications précédentes dans lequel une variable d'autorisation d'initiation de recherche étendue est stockée par le serveur MCX (S), la variable d'autorisation d'initiation de recherche étendue comprenant une liste du au moins un serveur MCX additionnel (S') pour lequel le serveur MCX (S) est autorisé d'envoyer (160) la requête de recherche, le procédé (100) comprenant en outre :
- Détermination (150) à partir de la variable d'autorisation d'initiation de recherche étendue, avant l'envoi (160) par le serveur MCX (S) de la requête de recherche au au moins un serveur MCX additionnel (S'), du au moins un serveur MCX additionnel (S') auquel la requête de recherche doit être envoyée (160).

8. Procédé (100) selon l'une quelconque des revendications précédentes dans lequel :
- Une variable d'autorisation de participation de recherche étendue est stockée par le au moins un serveur MCX additionnel (S'), la variable d'autorisation de participation de recherche étendue autorise ou non d'effectuer une recherche d'utilisateurs par le au moins un serveur MCX additionnel (S') en réponse à la requête de recherche envoyée par le serveur MCX (S), et
- La recherche (170), par le au moins un serveur MCX additionnel (S'), d'au moins un utilisateur est mise en œuvre uniquement lorsque la variable d'autorisation de participation de recherche étendue stockée par le au moins un serveur MCX additionnel (S') autorise le au moins un serveur MCX additionnel (S') à effectuer la recherche d'utilisateurs en réponse à la requête de recherche envoyée par le serveur MCX (S).

9. Système (200) comprenant un réseau de communication selon le standard 3GPP MCS « 3rd Generation Partnership Project Mission Critical Services », le réseau de communication comprenant une entité MCX cliente (C), un serveur MCX (S) et au moins un serveur MCX additionnel (S'), l'entité MCX cliente (C) et le serveur MCX (S) étant connectés au sein du réseau de communication,
l'entité MCX cliente (C) étant configurée pour :
- Réceptionner (110) une demande de recherche d'au moins un utilisateur, chaque utilisateur ayant un profil utilisateur comprenant au moins un attribut standardisé, la demande de recherche comprenant au moins un critère de recherche standardisé permettant d'identifier au moins un utilisateur à partir du au moins un attribut standardisé,
- Générer (120) une requête de recherche comprenant le au moins un critère de recherche standardisé, et
- Envoyer (130) au serveur MCX (S), la requête de recherche, et
le serveur MCX (S) étant configuré pour :
- Rechercher (140) le au moins un utilisateur, la recherche étant effectuée à partir de la requête de recherche, envoyée (130) par l'entité MCX cliente (C), dans une liste de profils utilisateurs stockée au niveau du serveur MCX (S),
- Déterminer (150) à partir d'une variable d'autorisation d'initiation de recherche étendue, avant l'envoi (160) de la requête de recherche au au moins un serveur MCX additionnel (S'), le au moins un serveur MCX additionnel (S') auquel la requête de recherche doit être envoyée (160),
- Envoyer (160) la requête de recherche au au moins un serveur MCX additionnel (S'), et
- Envoyer (210) à l'entité MCX cliente (C) un résultat de la recherche comprenant une liste d'au moins un utilisateur identifié, et
le au moins un serveur MCX additionnel (S') étant configuré pour :
- Rechercher (170) le au moins un utilisateur, la recherche étant effectuée à partir de la requête de recherche dans une liste de profils utilisateurs stockée au niveau du au moins un serveur MCX additionnel (S'),
- Envoyer (180) au serveur MCX (S) au moins un résultat additionnel de la recherche.

10. Système (200) selon la revendication précédente dans lequel le réseau de communication comprend en outre au moins un serveur MCX additionnel (S') configuré pour :
- Rechercher (170) le au moins un utilisateur, la recherche étant effectuée à partir de la requête de recherche dans une liste de profils utilisateurs stockée au niveau du au moins un serveur MCX additionnel (S'),
- Envoyer (180) au serveur MCX (S) au moins un résultat additionnel de la recherche, et
dans lequel le serveur MCX (S) est en outre configuré pour :
- Déterminer (150) à partir d'une variable d'autorisation d'initiation de recherche étendue, avant l'envoi (160) de la requête de recherche au au moins un serveur MCX additionnel (S'), le au moins un serveur MCX additionnel (S') auquel la requête de recherche doit être envoyée (160), et
- Envoyer (160) la requête de recherche au au moins un serveur MCX additionnel (S').

11. Programme d'ordinateur comprenant des instructions qui conduisent le système (200) selon la revendication 9 ou 10 à exécuter le procédé (100) selon l'une des revendications 1 à 8.

12. Support lisible par ordinateur, sur lequel est enregistré le programme d'ordinateur selon la revendication 11.
